# FASCICULE DE BREVET EUROPEEN

(11) **EP 2 260 120 B1**
(45) Date de publication et mention de la délivrance du brevet: **16.05.2012**
(21) Numéro de dépôt: 09720321.0
(22) Date de dépôt: 13.03.2009
(51) Int. Cl.: C23C 10/14

(54) **PROCEDE POUR FORMER UN REVETEMENT PROTECTEUR CONTENANT DE L'ALUMINIUM ET DU ZIRCONIUM SUR UNE PIECE METALLIQUE**
VERFAHREN ZUR BILDUNG EINER ALUMINIUM- UND ZIRKONIUMHALTIGEN SCHUTZBESCHICHTUNG AUF EINEM METALL
METHOD FOR FORMING A PROTECTIVE COATING CONTAINING ALUMINIUM AND ZIRCONIUM ON A METAL PART

(30) Priorité: 14.03.2008 FR 0801422
(43) Date de publication de la demande: 15.12.2010
(73) Titulaire: Snecma, 75015 Paris (FR)
(72) Inventeur: BROSSIER, Jérôme, F-77166 Evry-Cergy sur Yerre (FR); CADORET, Yannick, 78310 Maurepas (FR); MENUEY, Justine, F-86100 Chatellerault (FR); PASQUET, Annie, F-91160 Longjumeau (FR)
(74) Mandataire: Gevers France
(86) Numéro de dépôt international: PCT/EP2009/053009
(87) Numéro de publication internationale: WO 2009/112581

(56) Documents cités:
- EP-A- 1 466 996
- US-B1- 6 689 422

## Description

La présente invention concerne le dépôt d'un revêtement protecteur à base d'aluminium sur une pièce métallique. Elle vise plus particulièrement l'application d'un tel revêtement sur des pièces de turbomachine, notamment de moteur à turbine à gaz.

Un moteur à turbine à gaz, tel qu'utilisé pour la propulsion dans le domaine aéronautique comprend une entrée d'air atmosphérique qui communique avec un ou plusieurs compresseurs, dont une soufflante généralement, entraînés en rotation autour d'un même axe. Le flux primaire de cet air après avoir été comprimé alimente une chambre de combustion disposée annulairement autour de cet axe et est mélangé à un carburant pour fournir des gaz chauds en aval à une ou plusieurs turbines à travers lesquelles ceux-ci sont détendus, les rotors de turbine entraînant les rotors de compression. Les moteurs fonctionnent à une température des gaz moteurs en entrée de turbine que l'on cherche aussi élevée que possible car les performances lui sont liées. Dans ce but les matériaux sont sélectionnés pour résister à ces conditions de fonctionnement et les parois des pièces balayées par les gaz chauds, telles que les distributeurs ou les ailettes mobiles de turbine, sont pourvues de moyens de refroidissement. Par ailleurs, en raison de leur constitution métallique en superalliage à base de nickel ou de cobalt, il est nécessaire aussi de prémunir celles-ci de l'érosion et de la corrosion engendrées par les constituants des gaz moteurs à ces températures.

Un moyen connu pour assurer la protection de ces pièces est de déposer un revêtement à base d'aluminium sur les surfaces susceptibles d'agression par les gaz. L'aluminium se fixe au substrat par inter-diffusion métallique et forme une couche protectrice d'oxyde en surface. L'épaisseur du revêtement est de l'ordre de quelques dizaines de microns.

La présente invention se rapporte à la technique, en soi connue, de dépôt de l'aluminium en phase vapeur ou encore désignée aluminisation par dépôt en phase vapeur. Selon le procédé, on dispose les pièces à traiter dans une enceinte semi étanche dans laquelle l'atmosphère est constituée d'un mélange d'un gaz inerte ou réducteur, par exemple argon ou hydrogène, et d'un gaz actif comprenant un halogénure d'aluminium. A la température de réaction, entre 900°C et 1150°C, l'halogénure se décompose à la surface de la pièce en halogène gazeux et en aluminium qui diffuse dans le métal.

On produit l'halogénure en disposant dans l'enceinte avec les pièces à traiter, un cément donneur d'aluminium métallique ou d'alliage métallique d'aluminium avec un ou plusieurs des constituants métalliques, notamment le chrome, du matériau formant les pièces à protéger, en présence de granules d'un composé d'halogène, chlore ou fluor, qui forment l'activateur. On fait circuler le gaz inerte sur l'activateur à une température permettant la sublimation de l'halogène qui est entraîné sur le donneur et avec lequel il réagit pour produire l'halogénure métallique qui, à cette température, est sous forme vapeur.

L'activateur devant être gazeux à la température du revêtement et ne pas produire de polluants, on choisit généralement des produits tels que le chlorure d'ammonium, le fluorure d'ammonium ou le bifluorure d'ammonium. En présence d'hydrogène ou sous gaz neutre et à température élevée, ces molécules se décomposent en ammoniac et en halogène. La température de vaporisation dépend de la nature du sel halogéné choisi. Par exemple, elle est de 340°C pour le chlorure d'ammonium. L'activateur n'est utilisé que pour transporter en toute sécurité un acide halogéné dans le réacteur où le dépôt doit être effectué, c'est à dire la boîte semi-étanche. Le cation lié à cet halogène (ici l'ammonium) est par voie de conséquence inutile.

L'halogénure se décompose ensuite au contact du substrat métallique à revêtir permettant le dépôt de l'aluminium. Au cours de l'aluminisation il s'instaure un processus cyclique de dépôt d'aluminium se poursuivant continuellement jusqu'à ce que l'activité en aluminium de la surface du substrat devienne égale à celle imposée par le cément. L'halogène gazeux est reformé. Le revêtement obtenu sert éventuellement de couche intermédiaire entre le substrat métallique et une barrière de protection thermique de ce substrat sur lequel on vient l'appliquer. Le revêtement permet d'améliorer aussi bien la tenue de la barrière thermique sur le substrat que la capacité de ce dernier à conserver des caractéristiques d'usage en cas de dégradation de la barrière thermique.

Par ailleurs, on connaît l'effet favorable du zirconium sur l'adhérence d'une couche d'oxyde sur un substrat métallique, que cette couche soit formée par exposition à l'air à haute température ou par dépôt d'une barrière thermique.

Dans le brevet FR 2853329, on décrit un procédé d'aluminisation en phase vapeur modifié de manière à permettre la co-déposition de l'aluminium et du zirconium. L'halogénure d'ammonium du procédé APVS classique est remplacé au moins en partie par un composé de zirconium dont on souhaite voir la présence dans le dépôt à l'état de traces.

Parmi les sels de zirconium susceptibles de jouer le rôle d'un activateur, sont cités non limitativement, le chlorure de zirconium ZrCl₄, l'oxychlorure de zirconium ZrOCl₂ et le fluozirconate d'ammonium (NH₄)₂ZrF₆. Tous ces sels sont gazeux au-delà de 250°C. L'oxychlorure de zirconium est l'activateur préféré.

Le principe du dépôt reste identique à celui du procédé APVS. On dispose le cément à base d'aluminium ou d'alliage d'aluminium et notamment de chrome, sous forme de grains de diamètre compris entre 1 mm et quelques cm dans une boîte semi-étanche appropriée. Les pièces à revêtir sont disposées de façon à être mises en contact avec l'halogénure d'aluminium gazeux formé. L'activateur halogénure d'ammonium est remplacé en tout ou en partie par de l'oxychlorure de zirconium. On chauffe l'enceinte dans laquelle la boîte est placée jusqu'à la température du traitement APVS. Au delà d'une certaine température, l'activateur s'évapore et forme une vapeur riche en chlorure de zirconium. Ce dernier se décompose à la surface du substrat en superalliage de nickel ou cobalt pour former du zirconium à l'état métallique d'une part et un acide halogéné disponible pour former dans le cément donneur un halogénure d'aluminium d'autre part. Le zirconium déposé à la surface du substrat diffuse ensuite dans le revêtement de bêta -NiAl en cours de formation pour donner un intermétallique enrichi entre 300 et 1000 ppm (parties par million) de zirconium en moyenne dans le dépôt.

L'invention vise un procédé amélioré d'aluminisation par dépôt en phase vapeur de ce type avec codéposition de zirconium, permettant notamment de piloter la concentration en Zr dans le dépôt.

Le procédé de l'invention pour former sur la surface d'une pièce métallique un revêtement protecteur contenant de l'aluminium et du zirconium, comprend la mise en contact de ladite pièce et d'un cément en alliage d'aluminium, à une température de traitement, avec une atmosphère contenant un gaz actif qui,
d'une part réagit avec le cément pour former un halogénure d'aluminium gazeux, lequel se décompose au contact de la pièce en y déposant de l'aluminium métallique,
d'autre part contient ZrOCl₂ qui se décompose au contact de la pièce en y déposant le métal Zirconium, et est formé par vaporisation de granules de ZrOCl₂ solide à température ambiante.
Le procédé est caractérisé par le fait que l'on chauffe progressivement et ensemble la pièce, le cément et les granules de ZrOCl₂ dans une enceinte depuis la température ambiante jusqu'à la température de traitement avec un palier à 400°C ± 200°C ou plus particulièrement 500 ± 100°.

De préférence, la durée du palier de chauffage est 5 à 30 minutes, on chauffe progressivement à une vitesse de montée en température comprise entre 4 et 20°C par minute.

L'avantage du procédé de l'invention est de maîtriser la quantité de zirconium déposé. Le palier permet d'une part une bonne homogénéisation de l'atmosphère en zirconium avec des réactions chimiques complètes, d'autre part la montée rapide en température après la décomposition permet le dépôt simultané d'aluminium et de zirconium.

Selon une variante, on ajoute un halogène ou un halogénure d'ammonium dans l'enceinte : NH₄Cl, NH₄F et NH₄F, HF. Dans ce cas il faut s'assurer que le rapport ZrOCl₂ /NH₄F par exemple soit dans un rapport de 1 à 20.

La pièce contient au moins du nickel qui se combine avec l'aluminium pour former dans le revêtement un composé intermétallique NiAl dans lequel l'aluminium est partiellement substitué par le zirconium. Plus particulièrement la pièce est en superalliage à base de nickel ou de cobalt.

De préférence le cément en alliage d'aluminium comprend du chrome. L'alliage comprend en outre de préférence de 20% à 30% d'aluminium

L'atmosphère est formée, outre le gaz actif, d'un gaz inerte ou réducteur tel que l'argon ou l'hydrogène et la température de traitement est comprise entre 950 et 1200°C et de préférence d'environ 1080°C.

Le procédé est particulièrement avantageux dans le cas où l'on forme une sous couche aluminisée d'une barrière thermique telle que celle formée selon la technique présentée par exemple dans le brevet EP 1473378

L'aluminium à l'interface de la barrière thermique se combine à l'oxygène pour former de l'alumine qui, lorsque la couche est trop épaisse fragilise l'adhérence de la barrière thermique à la sous couche. Le zirconium dans la sous couche à l'interface métal oxyde ralentit la croissance de la couche d'alumine et favorise ainsi l'adhérence de la couche céramique

D'autres caractéristiques et avantages ressortiront de la description qui suit en se référant aux figures annexées.

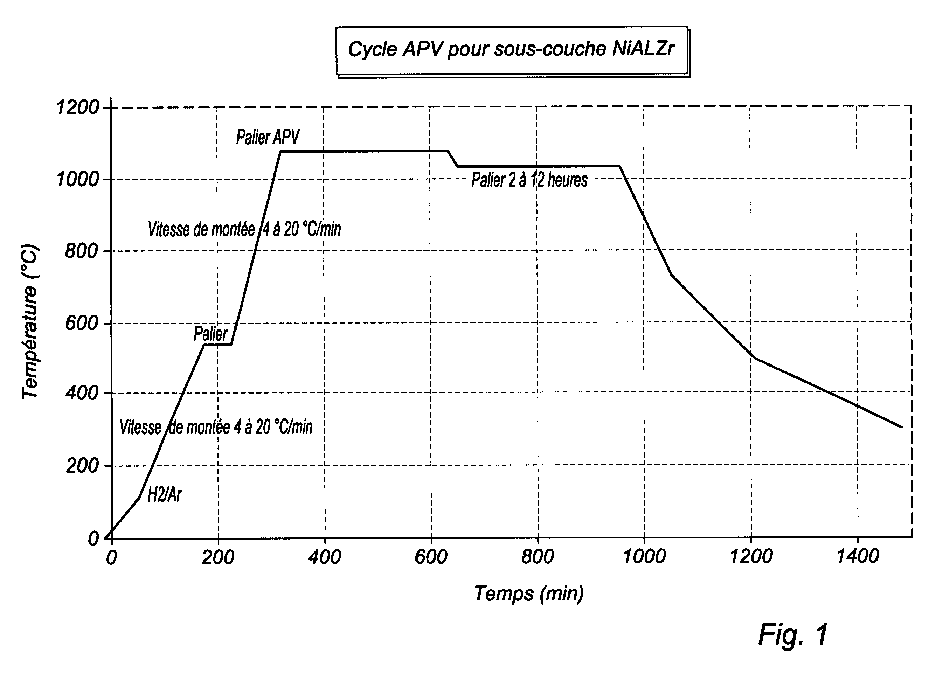

La figure 1 est un graphique représentant l'évolution en température d'un procédé selon l'invention.
Les figures 2 et 3 sont deux graphiques représentant deux exemples d'évolution du taux de zirconium en fonction de l'épaisseur de la couche aluminisée.

Comme cela a été rapporté plus haut le procédé s'applique avantageusement au traitement des aubes mobiles de turbine ou aux ailettes de distributeur.

On dispose, avec les pièces à traiter, un cément donneur d'aluminium constitué d'un alliage chrome-aluminium dans une boîte, elle-même placée dans une enceinte fermée de manière à pouvoir travailler sous atmosphère contrôlée. On a utilisé un cément à 30% d'aluminium. D'autres teneurs en aluminium permettent l'obtention de revêtements de différentes structures et de différentes épaisseurs.

On place également de l'oxychlorure de zirconium formant l'activateur, qui est solide à température ambiante, en proportion par rapport au cément de quelques pourcents, plus précisément entre 0,1 et 5%.

L'enceinte est ensuite purgée avant introduction du gaz constituant l'atmosphère initiale, argon ou l'hydrogène.

Le cycle de traitement comprend, comme on peut le voir sur le graphique annexé, une première étape de chauffage. La montée en température est progressive. Conformément à l'invention, la vitesse de montée en température est comprise entre 4 et 20°C par minute. Lorsque la température atteint 500°C environ, on maintient celle-ci constante pendant une durée comprise entre 5 et 30 minutes de manière à assurer la vaporisation des granulés d'oxychlorure de zirconium. La montée en température après la décomposition est déterminée de manière à assurer le dépôt de zirconium avec celui de l'aluminium.

Lorsque l'enceinte a atteint la température de traitement d'aluminisation, comprise entre 1080°C et 1180°C, on maintient celle-ci pendant 4 à 16 heures de façon à permettre le dépôt de l'aluminium et sa diffusion dans la pièce. En même temps se produit le dépôt du zirconium de manière à former une couche superficielle. Le zirconium est concentré dans la première couche.

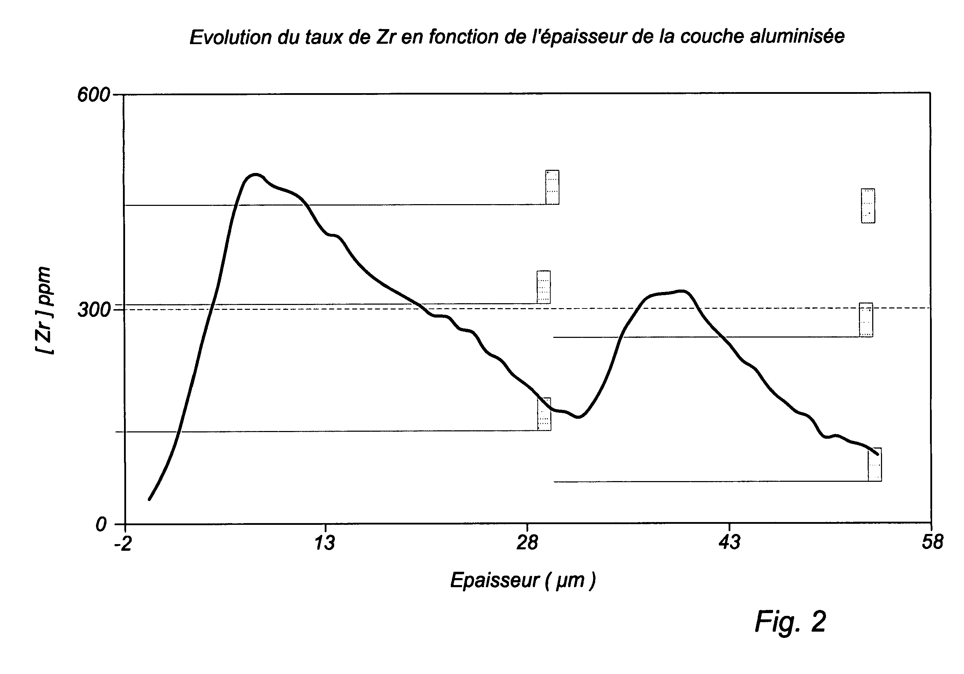

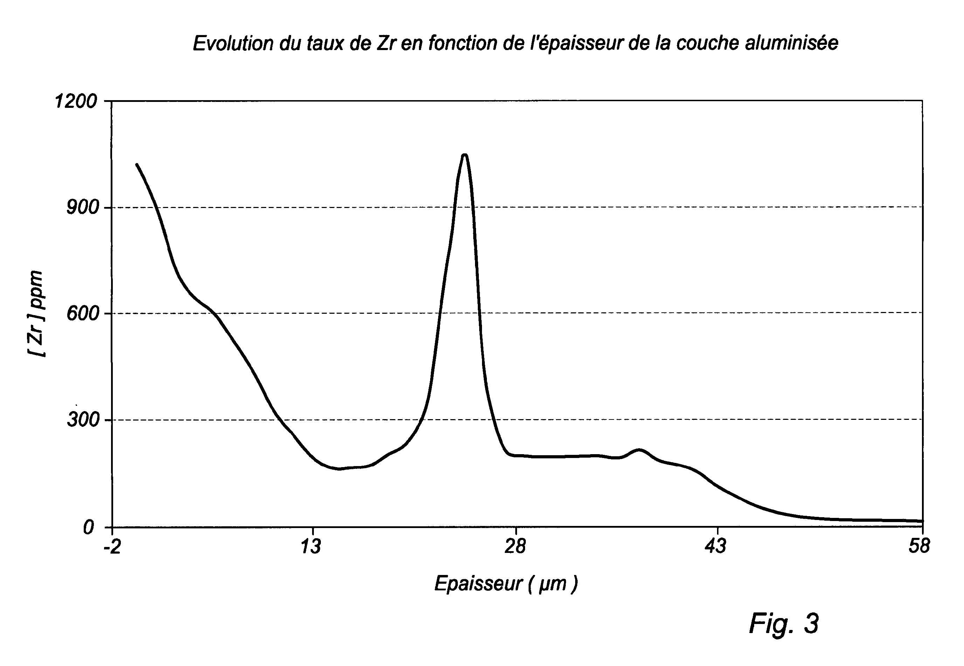

On a représenté sur les figures 2 et 3 deux exemples de concentrations de Zr, données en ppm, en fonction de l'épaisseur, donnée en µm, depuis la surface de la pièce traitée conformément à l'invention. L'évolution du taux est fonction de paramètres tels que la quantité d'activateur, l'atmosphère, la température de palier, et de la vitesse de montée en température. On observe dans les deux cas un pic de concentration en zirconium qui peut se situer à différents endroits dans l'épaisseur de la couche aluminisée en fonction des paramètres ci-dessus.

## Revendications

1. Procédé pour former sur la surface d'une pièce métallique un revêtement protecteur contenant de l'aluminium et du zirconium, dans lequel on met en contact ladite pièce et un cément en alliage d'aluminium, à une température de traitement, avec une atmosphère contenant un gaz actif qui réagit avec le cément pour former un halogénure d'aluminium gazeux, lequel se décompose au contact de la pièce en y déposant de l'aluminium métallique, le gaz actif contenant ZrOCl₂ qui se décompose au contact de la pièce en y déposant le métal Zr, et étant formé par vaporisation de granules de ZrOCl₂ solide à température ambiante, **caractérisé par le fait que** l'on chauffe progressivement et ensemble la pièce, le cément et les granules de ZrOCl₂ dans une enceinte depuis la température ambiante jusqu'à la température de traitement avec un palier à 400°C ± 200°C.

2. Procédé selon la revendication 1 dont le palier est à une température de 500°C ± 100°C.

3. Procédé selon la revendication 1 dans lequel la durée du palier de chauffage est de 5 à 30 minutes.

4. Procédé selon les revendications 1 ou 2 dans lequel on chauffe progressivement à une vitesse de montée en température comprise entre 4 et 20°C par minute.

5. Procédé selon la revendication 1, dans lequel ledit gaz actif contient en outre au moins un halogénure d'ammonium.

6. Procédé selon la revendication précédente dont le rapport ZrOCl2 sur l'halogénure d'ammonium est supérieur à 1 et en particulier inférieur à 20.

7. Procédé selon l'une des revendications précédentes, dans lequel la pièce contient au moins du nickel qui se combine avec l'aluminium pour former dans le revêtement un composé intermétallique NiAl dans lequel l'aluminium est partiellement substitué par le zirconium.

8. Procédé selon la revendication précédente, dans lequel la pièce est en superalliage à base de nickel ou de cobalt

9. Procédé selon l'une des revendications précédentes, dans lequel ledit gaz actif contient au moins un halogène.

10. Procédé selon l'une des revendications précédentes, dans lequel l'alliage d'aluminium comprend du chrome.

11. Procédé selon l'une des revendications précédentes, dans lequel ladite atmosphère est formée, outre le gaz actif d'un gaz inerte ou réducteur tel que l'argon ou l'hydrogène.

12. Procédé selon l'une des revendications précédentes, dans lequel ladite température de traitement est comprise entre 950 et 1200°C et de préférence 1080°C.

## Claims

1. Method for forming a protective coating containing aluminium and zirconium on the surface of a metal part, wherein said part is put into contact with a cement made of aluminium alloy, at a treatment temperature, with an atmosphere containing an active gas which reacts with the cement to form a gaseous aluminium halide, which decomposes in contact with the part depositing metallic aluminium thereon, the active gas containing ZrOCl₂ that decomposes in contact with the part depositing Zr metal thereon, and being formed by vaporizing granules of ZrOCl₂ that are solid at ambient temperature, **characterized in that** the part, the cement and the ZrOCl₂ granules are progressively heated together in a chamber from ambient temperature to the treatment temperature with a plateau at 400°C ± 200°C.

2. Method according to claim 1, in which the plateau is at a temperature of 500°C ± 100°C.

3. Method according to claim 1, wherein the heating plateau lasts 5 to 30 minutes.

4. Method according to claim 1 or 2, wherein heating is carried out progressively at a temperature rise rate of between 4 and 20°C per minute.

5. Method according to claim 1, wherein said active gas additionally contains at least one ammonium halide.

6. Method according to the preceding claim, wherein the ratio of ZrOCl₂ to ammonium halide is greater than 1 and in particular less than 20.

7. Method according to one of the preceding claims, wherein the part contains at least nickel which combines with aluminium to form an intermetallic compound NiAl in the coating in which aluminium is partially substituted by zirconium.

8. Method according to the preceding claim, wherein the part is a superalloy based on nickel or cobalt.

9. Method according to one of the preceding claims, wherein said active gas contains at least one halogen.

10. Method according to one of the preceding claims, wherein the aluminium alloy contains chromium.

11. Method according to one of the preceding claims, wherein said atmosphere is formed, apart from the active gas, of an inert or reducing gas such as argon or hydrogen.

12. Method according to one of the preceding claims, wherein said treatment temperature lies between 950 and 1200°C and preferably 1080°C.

## Patentansprüche

1. Verfahren zur Bildung einer Schutzbeschichtung umfassend Aluminium und Zirkonium auf der Oberfläche eines Metallteiles, bei dem man das besagte Teil und einen Zement aus Aluminiumlegierung bei einer Beschichtungstemperatur in einer Atmosphäre umfassend ein Aktivgas in Berührung bringt, das mit dem Zement reagiert, um ein gasförmiges Aluminium-Halogenid zu bilden, das sich beim Kontakt mit dem Teil zersetzt und dabei metallisches Aluminium ablagert, wobei das Aktivgas ZrOCl₂ umfasst, das sich beim Kontakt mit dem Teil zersetzt und dabei das Metall Zr ablagert, und durch Verdampfung von Granulaten von bei Umgebungstemperatur festem ZrOCl₂ gebildet wird, durch die Tatsache gekennzeichnet, dass man das Teil, den Zement und die ZrOCl₂ Granulate nach und nach gemeinsam in einer Umhausung von der Umgebungstemperatur in Stufen von 400°C ± 200°C bis auf die Beschichtungstemperatur erhitzt.

2. Verfahren nach Anspruch 1, bei dem die Stufe bei einer Temperatur von 500°C ± 100°C liegt.

3. Verfahren nach Anspruch 1, bei dem die Dauer der Erhitzungsstufe 5 bis 30 Minuten beträgt.

4. Verfahren nach den Ansprüchen 1 oder 2, bei dem man nach und nach bei einer Temperaturanstiegsgeschwindigkeit von 4 bis 20°C pro Minute erhitzt.

5. Verfahren nach Anspruch 1, bei dem das besagte Aktivgas darüber hinaus zumindest ein Ammonium-Halogenid umfasst.

6. Verfahren nach dem vorherigen Anspruch, bei dem das Verhältnis des ZrOCl₂ zum Ammonium-Halogenid größer als 1, und im Speziellen kleiner als 20 ist.

7. Verfahren nach einem der vorherigen Ansprüche, bei dem das Teil zumindest Nickel umfasst, das sich mit dem Aluminium verbindet, um in der Beschichtung eine intermetallische NiAl Verbindung zu bilden, in der das Aluminium teilweise durch das Zirkonium ersetzt wird.

8. Verfahren nach dem vorherigen Anspruch, bei dem das Teil aus einer Superlegierung basierend auf Nickel oder Kobalt besteht.

9. Verfahren nach einem der vorherigen Ansprüche, bei dem das besagte Aktivgas zumindest ein Halogen umfasst.

10. Verfahren nach einem der vorherigen Ansprüche, bei dem die Aluminiumlegierung Chrom umfasst.

11. Verfahren nach einem der vorherigen Ansprüche, bei dem die besagte Atmosphäre neben dem Aktivgas durch ein Inertgas oder Reduziergas, wie Argon oder Wasserstoff gebildet wird.

12. Verfahren nach einem der vorherigen Ansprüche, bei dem die besagte Beschichtungstemperatur zwischen 950 und 1200°C und vorzugsweise 1080°C liegt.
